# EUROPEAN PATENT SPECIFICATION

(11) **EP 3 743 239 B1**
(45) Date of publication and mention of the grant of the patent: **09.02.2022**
(21) Application number: 19707468.5
(22) Date of filing: 25.01.2019
(51) Int. Cl.: B23K 37/053, F16L 1/10, F16L 13/02, B23K 101/06

(54) **DEVICE FOR ALIGNING CONTIGUOUS TUBES FOR LAYING TUBULAR PIPES**
VORRICHTUNG ZUM AUSRICHTEN VON ANEINANDERGRENZENDEN ROHREN ZUM VERLEGEN VON ROHRLEITUNGEN
DISPOSITIF DESTINÉ À L'ALIGNEMENT DE TUBES CONTIGUS DESTINÉS À LA POSE DE TUYAUX TUBULAIRES

(30) Priority: 25.01.2018 IT 201800001889
(43) Date of publication of application: 02.12.2020
(73) Proprietor: GORIZIANE GROUP SPA, 34070 Villesse (GO) (IT)
(72) Inventor: ZANIN, Pierluigi, 35030 Selvazzano Dentro (PD) (IT); SOMMAGGIO, Nicola, 33040 Ronchis (UD) (IT); QUALIZZA, Claudio, 33040 San Leonardo (UD) (IT)
(74) Representative: Cantaluppi, Stefano
(86) International application number: PCT/IB2019/050624
(87) International publication number: WO 2019/145904

(56) References cited:
- WO-A1-2014/056020
- JP-A- H04 203 274
- US-A1- 2017 182 605
- US-B2- 7 011 244

## Description

The invention lies within the technical field of devices for aligning and clamping contiguous tubes from the inside, which tubes are intended to be coupled in extension of one another in order to create tubular pipes, and in particular to a device for aligning contiguous tubes for laying tubular pipes.

Devices of this kind, which are also referred to using the acronym ILUC (internal line-up clamp), are widely used in the laying of pipes to aid the process of joining contiguous tubes for welding, which tubes are intended specifically to form the pipe.

Traditionally, ILUCs comprise two contiguous and coaxial rings of radial expanders, which rings are spaced apart by a ring of welding support shoes. The rings of expanders are actuated by means of conical actuators or actuators having sloped surfaces which, after the relative mutual movement of the respective sloped profiles, act by expanding and, vice versa, retracting said radial expanders of each relevant ring in order to make them integral with one another from the inside and respectively free two contiguous tubes of the pipe in the joining process. The radial expanders are also designed to coaxially centre the two abutting tubes by eliminating possible local deformations, ovalizations and the like until the ends to be joined have been brought into mutual alignment.

The actuators of the radial expanders have the appreciable advantage of highly reliable functioning both when clamping and unclamping the radial expanders, but are disadvantageous in that they have large axial dimensions.

Normally, therefore, the main disadvantage of these devices is their excessive length which is due, inter alia, to the actuator mechanisms which make it difficult to manoeuvre the ILUC for positioning, handling and possible recovery, in particular when laying vertical pipes. Examples of similar devices produced according to the prior art are described in US4875615(A), US6662994(B2), US6779944(B2), JPH04203274(A) and US20170182605(A1). US7011244(B2) (basis for the preamble of claim 1) provides a centering insert device for centering two pipe elements to be welded together end to end, the device comprising a central body supporting a plurality of clamps.

JPH04203274(A) discloses a device capable of enduring against a high pressure caused by a water thrust force and of which size can be reduced by a method wherein an electrical operating gear reducer is operated to rotate a driving shaft, a needle is reciprocated and a degree of opening of the needle is adjusted.

US20170182605(A1) relates to a field system and methods that can be deployed in the application of pipe welding. The field system provides many embodiments relating to pipe welding systems and methods, that can be used in combination with one another, or individually. The document further relates to welded pipes that result from some or all of such processes.

WO2014/056020 discloses an external aligner for flexible tubes made of a plastics material.

The possibility of using the teaching disclosed in WO'020 in an ILUC would lead to the motors of the actuators being radially arranged. This arrangement is possible in an external aligner, where there are no limits to the increase in radial dimensions, but it is clearly not possible in an internal ILUC aligner, in which the radial dimensions are strictly limited. The problem addressed by the present invention is that of providing an ILUC device that is very compact and versatile. The device is also required to be suitably equipped to allow the tubes that are to be joined to be welded in a protective atmosphere, even in the presence of strong ventilation in the pipe.

Moreover, the device is required to be able to be modularly adapted to different requirements, for example to allow cables and tubes to pass therethrough or to be fitted with a motorisation module, a plasma arc welding module, visual inspection systems or the like. Not least, it is required that the device be provided with means which allow emergency braking if the winch and/or umbilical interface driving said winch fails. This problem is solved and these aims are achieved by a device as defined in claim 1.

Preferred embodiments of the device according to the present invention are defined in the dependent claims.

In particular, the device is actuated by a system of electric motors and gears so as to reduce the longitudinal dimensions of the actuation mechanism with respect to traditional wedge actuation. There is also a mechanism for release of the expanders by means of a wedge system, which allows the machine to be extracted from the tube if the actuation mechanism fails.

The device is also provided with a dead-man-control emergency braking system which is actuated electropneumatically if the lifting or feeding system, in particular the umbilical which both supports the machine and feeds the braking system, fails, thereby preventing the device from falling uncontrollably into the pipe.

The features and advantages of the invention will become clearer from the following detailed description of a preferred but not exclusive embodiment thereof, shown by way of non-restrictive example and with reference to the accompanying drawings, in which:

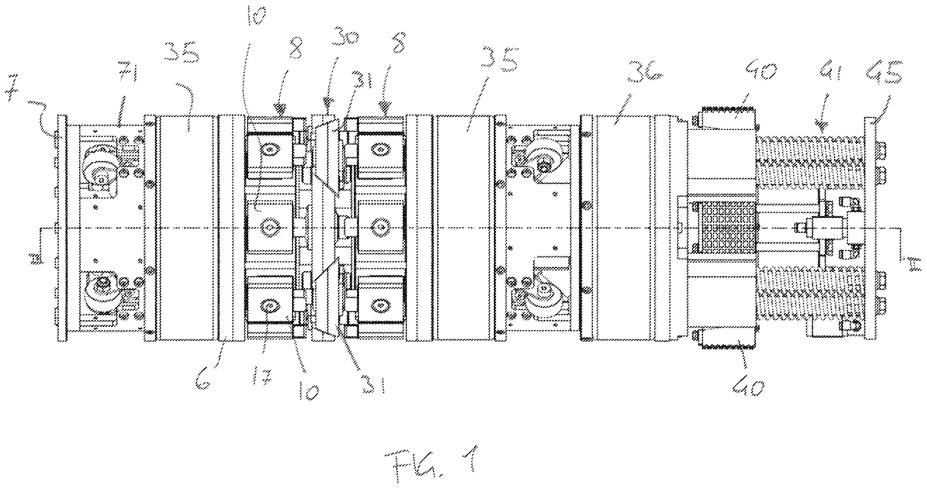

- Fig. 1 is a side elevation of the device according to the invention;

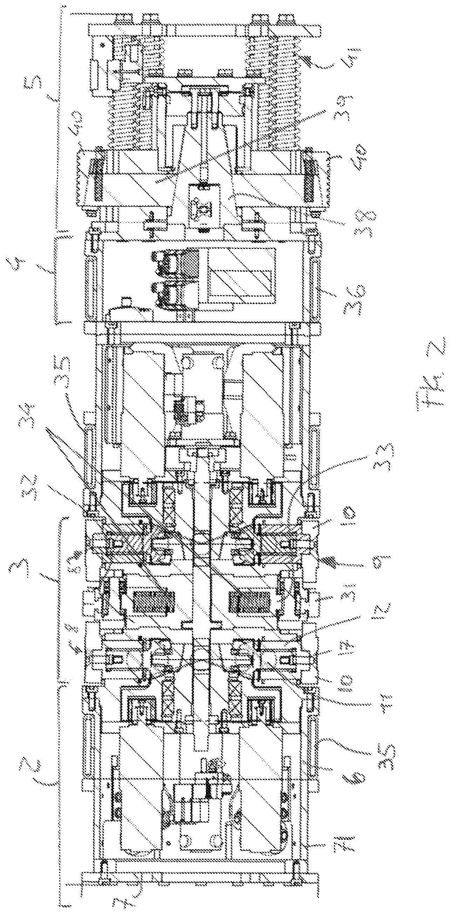

- Fig. 2 is a sectional view along the line II-II in Fig. 1;

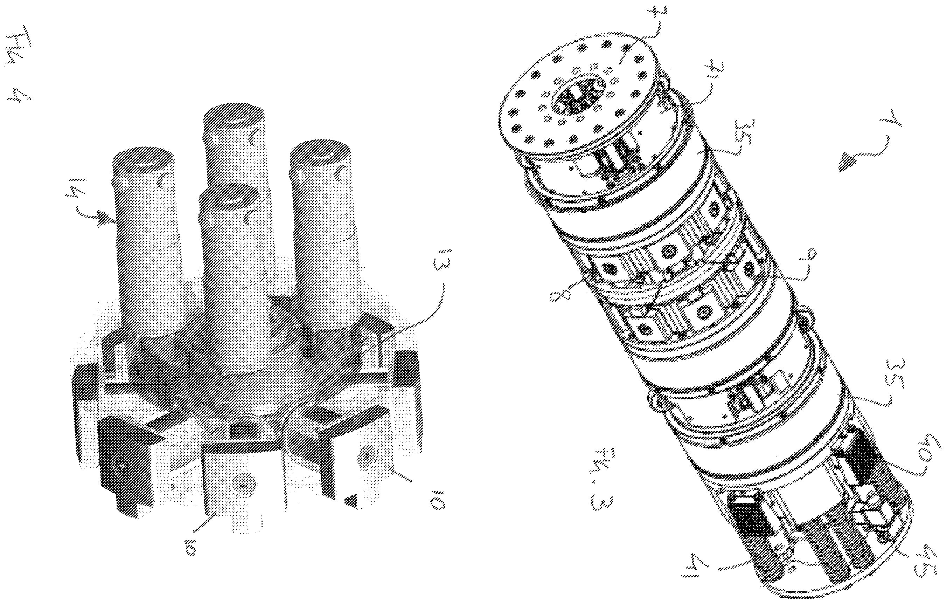

- Fig. 3 is a perspective view of the same device;

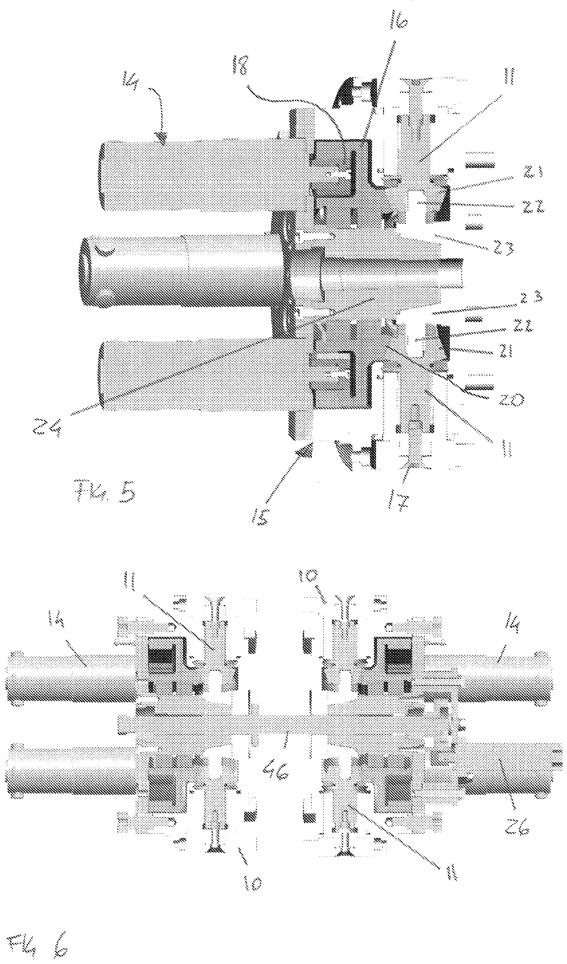

- Fig. 4 and 5 are a perspective view and sectional view, respectively, of a detail of the device of this invention;

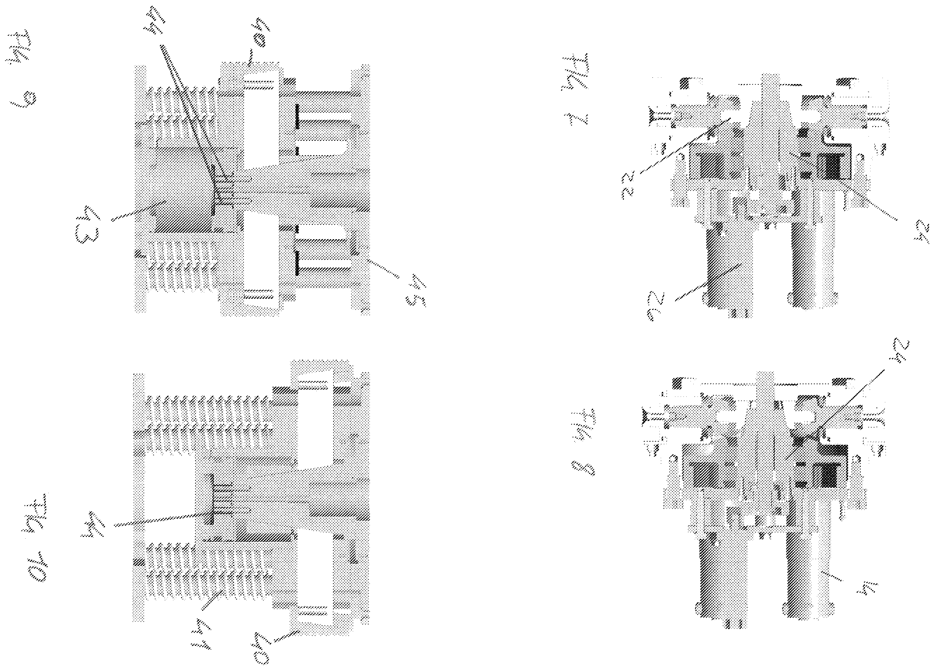

- Fig. 6 to 8 are sectional views of the same detail in different operating phases;
- Fig. 9 and 10 are sectional views of another detail of the same device in two operating phases.

In the drawings, the reference numeral 1 indicates, as a whole, a device for aligning contiguous tubes T1, T2, Tn for laying tubular pipes T.

The device 1 comprises four contiguous modules, respectively a front module 2, central module 3, rear module 4 and an emergency braking module 5. The front module includes a frame 6 that has a flange 7 to which an umbilical interface 71 connects that is used to hold the device 1 once inserted into the pipe T. The umbilical interface 71 is used to supply energy and working fluids, for example compressed air, to the device 1.

The front module 2 is connected to the central module 3 on the opposite side to the flange 7. The central module 3 comprises at least two contiguous modules 8 of radial expanders 9. The radial expanders each comprise a shoe 10 that is intended to be pressed against the internal wall of the tube Tn and Tn+1 and is each associated with a corresponding actuator in order to expand and, vice versa, retract the radial expanders towards and from the wall of the contiguous tubes of the pipe in the process of joining said tubes.

Each actuator comprises a screw 11 and female screw 12 device, the screw (or female screw) of which is translatably integral with the relevant shoe 10 by means of a clamping screw 17 while the corresponding female screw 12 (or screw) is actuated by a transmission 13 by means of at least one electric motor 14.

The transmission 13 comprises a gear 15 that has, on one side close to the front module 2 (on the same side in which the electric motors 14 are located), a cylindrical ring gear 16 with which respective pinions 18 of the electric motors 14 are meshingly engaged. A ring bevel gear 20 is formed on the side opposite the gear 15, with which ring bevel gear respective bevel pinions 21 are meshingly engaged, one for each screw and female screw actuator. The pinions 21 are integral with the screws of each actuator; alternatively, however, the reverse is possible.

All the screws 11 are rotationally synchronised by means of this meshing.

Each pinion 21 is in turn supported on a relevant pin 22 that extends radially from a runner 23. The assembly of runners 23 forms a contractible collar, the surface of which opposite the pins 22 is conical.

Said collar of runners 23 is mounted on a conical wedge 24 such that the relative axial movement between collar and runners involves the radial expansion or retraction of the runners and the consequent engaging / disengaging of the shoes 10 from the wall of the pipe T. The two wedges are interconnected by a right-hand/left-hand double-threaded screw 46 (as is often the case in turnbuckles for cables) which is actuated into rotation by a pneumatic motor 26 such that the wedges are pushed in opposite directions from one another for the emergency disengagement of the shoes 10 from the wall of the tubes T. Alternatively, it is possible to provide a system comprising a joint that holds the two central wedges in an overlapping position. When the machine is being driven by means of the umbilical, if a determined pulling force is exceeded, the disconnection of the joint causes the internal wedges to move apart on account of the expansion force which is exerted on the sloped surface, and therefore causes the disengagement of the shoes. The joint in question can be a breakaway screw joint or spring joint.

It is possible to insert a welding contact module 30 between the modules 8 of radial expanders, which module is produced by means of a plurality of welding shoes 31, generally made of copper, which are mounted so as to be radially contractible on a drum 32. The welding shoes 31 are secured on a piston 33 which is stressed radially outwards by springs 34 and pulled back radially inwards by means of the shoes 10 of the expanders. The welding shoes 31 move axially with respect to the machine in order to allow the shoes to be held in contact with one another, by means of sloped surfaces, and therefore to provide a continuous surface that contacts the tube over the entire expansion movement of the module.

An inflatable annular washer 35 is located close to each module of radial expanders on the two outermost sides of the central module. Once inflated inside the pipe to be welded, a discharge chamber is defined between the washers 35, in which chamber a protective atmosphere that has a low oxygen content is created by insufflation in order to prevent the metal from oxidising during welding. A third annular washer 36 is arranged on the rear module; the third washer 36 is used to isolate the welding region in the central module from the ventilation effect in the pipe.

Lastly, an emergency braking module is provided which is used to prevent the ILUC device from falling into the pipe if the umbilical interface fails.

The braking module comprises a wedge system 38, 39, the mutually contacting sloped surfaces of which actuate radially respective brake shoes 40. A series of compression springs 41 provides the resilient stress required to push the shoes 40 radially outwards. This stress is normally counteracted by a pneumatic cylinder 43 which is pressurised by means of the umbilical interface and therefore holds the brake shoes in a radially contracted position. The brake shoes are in turn individually disconnected from the control rods with which they interface by means of a sloped plane in order to guarantee the brake shoes further movement and the possibility of adapting to possible non-circularities of the tubes.

The brake shoes are held in the contracted position by means of springs, thereby avoiding dovetail machining in order to guarantee contact between the shoes 40 and the rods 39.

The wedge mechanism and the relative axial movement of the brake shoes with respect to the ILUC device during expansion involve an increase in expansion force caused by the mass of the device multiplied by the deceleration thereof, thus increasing the braking capacity, after the friction between the shoes and the surface of the tube has increased.

A quick release circuit 44 of the cylinder 43 is mounted on the module; this circuit 44 comprises a valve which is normally open and is controlled by means of two solenoid valves that are normally discharged and arranged in parallel; the valves control the discharge valve when excited by the power supply from the umbilical interface, thus controlling the closure of the controlled valve. Providing two valves in parallel increases the redundancy of the system by preventing accidental emergency braking. The valves are controlled by means of two separate electrical circuits so as to reduce undesired actuations caused by electrical failure. The braking module is terminated by a second flange 45 for possible connection to a plasma module (not shown).

Eight damped centring wheels are also provided which are distributed along the external casing of the ILUC and are used to keep the casing centred in the pipe in which it operates.

The invention designed in this way has numerous advantages over the devices produced in accordance with the prior art. These include the following:
- Longitudinal compactness due to the absence of longitudinal actuation pistons which have large longitudinal dimensions. The electric motors do not require the entire cross-sectional dimensions of the machine as is the case with pneumatic piston actuation, thereby allowing space for auxiliary devices or systems to be installed.
- Electrically actuating the expanders and the modular construction of the machine make it possible to prevent compressed air from being fed when the emergency braking module is not required (for example when used to lay S-shaped tubes).
- The braking device having an increased actuation speed with respect to the devices that are only pneumatically actuated and controlled by the pneumatic feed tube failing. The actuation speed is caused by discharging directly on the cylinder, which prevents the delay caused by the possible failure of the umbilical at a distance from the tube because it involves a delay in discharging that is caused by the presence of pressurised air in the cross section of the tube that remains connected to the machine. The presence of a redundancy on the brake control which decreases the possibility of undesired actuations of the brake itself. Wedge system for expanding the shoes which increases the braking force as a result of the action of the weight of the machine and of the deceleration thereof.
- The possibility of obtaining clear paths through the machine for tubes or cables to pass through which feed possible modules connected in series to the machine.

## Claims

1. Device for aligning contiguous tubes for laying tubular pipes, comprising at least two contiguous rings of radial expanders (9) and respective actuators for expanding and, vice versa, contracting said radial expanders (9) in order to make them integral with one another from the inside and respectively free two contiguous tubes of the pipe in the process of joining said tubes, **characterised in that** said actuators comprise, for each radial expander (9), a screw (11) and female screw (12) device, the screw (11) or female screw (12) of which is translatably integral with a shoe (10) while the corresponding female screw (12) or screw (11) is actuated by a transmission (13) by means of at least one electric motor (14) that is axially arranged, the transmission (13) comprising a bevel gear between the expander (9) and the motor (14).

2. Device according to claim 1, wherein the transmission (13) comprises a first ring gear (16), which engages with at least one first pinion (18) of said at least one electric motor (14), and a bevel gear pair (24), which has a second ring (20) that is integral with said first ring (16) and a second pinion (21) that is rotatably integral with the relevant screw (11) or female screw (12) of said screw and female screw device.

3. Device according to either claim 1 or claim 2, wherein the first ring (16) is engaged by a plurality of first pinions (18) each mounted on a corresponding plurality of said electric motors (14).

4. Device according to claim 3, wherein the second pinions (21) are supported on a relevant slide which is slidably connected to a sloped device in order to rapidly retract said radial expanders (9).

5. Device according to claim 4, wherein the sloped device comprises an assembly of runners (23) supporting the respective second pinions (21) which form a radially contractible collar, the surface of which opposite the radial expanders (9) is conical, said collar being mounted on a conical wedge (24) such that the relative axial movement between collar and conical wedge (24) involves the expansion or radial retraction of the runners (23) and the consequent engaging / disengaging of the radial expanders (9) from the wall of the pipe T.

6. Device according to claim 5, wherein the wedges of the two contiguous rings of radial expanders are interconnected by a right-hand/left-hand double-threaded screw (46) which is motorised for the emergency disengagement of the respective radial expanders.

7. Device according to one or more of the preceding claims, wherein a welding contact module (30) is provided between the rings of radial expanders (9), which module includes a plurality of welding shoes (31) mounted so as to be radially contractible on a drum (32).

8. Device according to any preceding claim, wherein an annular washer (35) is located close to each module of radial expanders (9), which annular washer can inflate such that a controlled-environment discharge chamber is defined between said washers.

9. Device according to any preceding claims, comprising an umbilical interface (71) arranged to hold and feed the device once inserted in the pipe, and an emergency braking module (5) which is normally passive and can be automatically activated if the umbilical interface fails.

10. Device according to claim 9, wherein the braking module (5) comprises a wedge system (38, 39), the mutually contacting sloped surfaces of which actuate radially respective brake shoes (40), a series of springs (41) which stress the shoes (40) radially outwards and an actuator which normally counteracts the resilient stress of the shoes (40) in order to hold said shoes in a radially contracted position, said actuator being activated by the umbilical interface (71) so as to release the shoes (40) if the umbilical interface is damaged.

## Patentansprüche

1. Vorrichtung zum Ausrichten von aneinandergrenzenden Rohren zur Verlegung von Rohrleitungen, die zumindest zwei aneinandergrenzende Ringe von radialen Aufweitungselementen (9) und jeweilige Betätigungselemente zum Aufweiten und umgekehrt zum Zusammenziehen der radialen Aufweitungselemente (9) umfassen, um diese von der Innenseite einstückig miteinander zu verbinden und jeweils zwei aneinandergrenzende Rohre der Leitung beim Verbindungsvorgang der Rohre freizugeben, **dadurch gekennzeichnet, dass** die Betätigungselemente für jedes radiale Aufweitungselement (9) eine Vorrichtung mit Schraube (11) und Innengewinde (12) umfassen, deren Schraube (11) oder Innengewinde (12) mit einem Schuh (10) einstückig verschiebbar ist, während das entsprechende Innengewinde (12) oder die Schraube (11) durch ein Getriebe (13) mittels zumindest eines axial angeordneten Elektromotors (14) betätigt wird, wobei das Getriebe (13) ein Kegelrad zwischen dem Aufweitungselement (9) und dem Motor (14) umfasst.

2. Vorrichtung nach Anspruch 1, wobei das Getriebe (13) ein erstes Hohlrad (16), das mit zumindest einem ersten Ritzel (18) des zumindest einen Elektromotors (14) in Eingriff steht, und ein Kegelradpaar (24) umfasst, das ein zweites Hohlrad (20), das mit dem ersten Hohlrad (16) einstückig verbunden ist, und ein zweites Ritzel (21) aufweist, das mit der entsprechenden Schraube (11) oder dem Innengewinde (12) der Schrauben- und Innengewinde-Vorrichtung einstückig drehbar ist.

3. Vorrichtung nach Anspruch 1 oder Anspruch 2, wobei das erste Hohlrad (16) mit einer Vielzahl von ersten Ritzeln (18) in Eingriff steht, die jeweils an einer entsprechenden Vielzahl der Elektromotoren (14) angebracht sind.

4. Vorrichtung nach Anspruch 3, wobei die zweiten Ritzel (21) auf einem entsprechenden Schlitten gelagert sind, der mit einer geneigten Vorrichtung verschiebbar verbunden ist, um die radialen Aufweitungselemente (9) rasch zurückzuziehen.

5. Vorrichtung nach Anspruch 4, wobei die geneigte Vorrichtung eine Anordnung von Kufen (23) umfasst, welche die jeweiligen zweiten Ritzel (21) lagern, die einen radial zusammenziehbaren Kranz bilden, dessen den radialen Aufweitungselementen (9) gegenüberliegende Oberfläche kegelförmig ist, wobei der Kranz an einem kegelförmigen Keil (24) montiert ist, sodass die axiale Relativbewegung zwischen dem Kranz und dem kegelförmigen Keil (24) das Aufweiten oder das radiale Zurückziehen der Kufen (23) und das daraus resultierende Einrücken/Ausrücken der radialen Aufweitungselemente (9) von der Wand des Rohrs T bewirkt.

6. Vorrichtung nach Anspruch 5, **dadurch gekennzeichnet, dass** die Keile der beiden aneinandergrenzenden radialen Aufweitungselemente durch eine Rechts-Links-Doppelgewindeschraube (46) miteinander verbunden sind, die zum Notausrücken der jeweiligen radialen Aufweitungselemente motorisiert ist.

7. Vorrichtung nach einem oder mehreren der vorhergehenden Ansprüche, wobei zwischen den Ringen der radialen Aufweitungselemente (9) ein Schweißkontaktmodul (30) vorgesehen ist, das eine Vielzahl von Schweißschuhen (31) umfasst, die auf einer Trommel (32) radial zusammenziehbar montiert sind.

8. Vorrichtung nach einem der vorhergehenden Ansprüche, wobei eine Ringscheibe (35) in der Nähe jedes Moduls der radialen Aufweitungselemente (9) angeordnet ist, wobei sich die Ringscheibe aufblasen kann, sodass eine Auslasskammer mit kontrollierter Umgebung zwischen den Scheiben gebildet wird.

9. Vorrichtung nach einem der vorhergehenden Ansprüche, die eine Nabelschnurschnittstelle (71), die zum Halten und Zuführen der Vorrichtung, sobald diese in das Rohr eingeführt ist, eingerichtet ist, und ein Notbremsmodul (5) umfasst, das normalerweise passiv ist und automatisch aktivierbar ist, wenn die Nabelschnurschnittstelle ausfällt.

10. Vorrichtung nach Anspruch 9, wobei das Bremsmodul (5) ein Keilsystem (38, 39), dessen sich gegenseitig berührende geneigte Flächen jeweilige Bremsbacken (40) radial betätigen, eine Reihe von Federn (41), welche die Backen (40) radial nach außen drücken, und ein Betätigungselement umfasst, das normalerweise dem elastischen Druck der Backen (40) entgegenwirkt, um die Backen in einer radial zusammengezogenen Position zu halten, wobei das Betätigungselement durch die Nabelschnurschnittstelle (71) zum Freigeben der Backen (40) aktiviert wird, wenn die Nabelschnurschnittstelle beschädigt ist.

## Revendications

1. Dispositif pour l'alignement de tubes contigus pour la pose de tuyaux tubulaires, comprenant au moins deux bagues contiguës d'expanseurs radiaux (9) et des actionneurs respectifs pour l'expansion et, vice versa, la contraction desdits expanseurs radiaux (9) afin de les rendre solidaires les uns des autres depuis l'intérieur et respectivement libérer deux tubes contigus du tuyau lors du processus de jonction desdits tubes, **caractérisé en ce que** les actionneurs comprennent, pour chaque expanseur radial (9), un dispositif à vis (11) et vis femelle (12), dont la vis (11) ou vis femelle (12) est solidaire en translation avec une semelle (10) tandis que la vis femelle (12) ou vis (11) correspondante est actionnée par une transmission (13) au moyen d'au moins un moteur (14) électrique qui est agencé axialement, la transmission (13) comprenant un engrenage conique entre l'expanseur (9) et le moteur (14).

2. Dispositif selon la revendication 1, dans lequel la transmission (13) comprend une première couronne (16), qui vient en prise avec au moins un premier pignon (18) dudit au moins un moteur électrique (14), et une paire d'engrenages coniques (24), qui possède une seconde couronne (20) qui est solidaire de ladite première couronne (16) et un second pignon (21) qui est solidaire en rotation avec la vis (11) ou vis femelle (12) associée dudit dispositif à vis et vis femelle.

3. Dispositif selon soit la revendication 1 soit la revendication 2, dans lequel la première couronne (16) est mise en prise par une pluralité de premiers pignons (18) montés chacun sur une pluralité correspondante desdits moteurs (14) électriques.

4. Dispositif selon la revendication 3, dans lequel les seconds pignons (21) sont portés sur un coulisseau associé qui est relié de manière coulissante à un dispositif incliné afin de rétracter rapidement lesdits expanseurs radiaux (9).

5. Dispositif selon la revendication 4, dans lequel le dispositif incliné comprend un ensemble de patins (23) portant les seconds pignons (21) respectifs qui forment un collier radialement contractile, dont la surface opposée aux expanseurs radiaux (9) est conique, ledit collier étant monté sur une clavette conique (24) de sorte que le mouvement axial relatif entre le collier et la clavette conique (24) implique l'expansion ou la rétraction radiale des patins (23) et la mise en prise/désolidarisation des expanseurs radiaux (9) qui en découle, par rapport à la paroi du tuyau T.

6. Dispositif selon la revendication 5, dans lequel les clavettes des deux bagues contiguës d'expanseurs radiaux sont reliées entre elles par une vis à double filetage à droite/à gauche (46) qui est motorisée pour la désolidarisation d'urgence des expanseurs radiaux respectifs.

7. Dispositif selon l'une ou plusieurs des revendications précédentes, dans lequel un module de contact de soudage (30) est ménagé entre les bagues d'expanseurs radiaux (9), le module comportant une pluralité de semelles de soudage (31) montées de façon à être radialement contractiles sur un tambour (32).

8. Dispositif selon une quelconque revendication précédente, dans lequel une rondelle annulaire (35) est située près de chaque module d'expanseurs radiaux (9), laquelle rondelle annulaire peut se déployer de sorte qu'une chambre de décharge à environnement contrôlé soit définie entre lesdites rondelles.

9. Dispositif selon l'une quelconque des revendications précédentes, comprenant une interface ombilicale (71) agencée pour retenir et alimenter le dispositif une fois inséré dans le tuyau, et un module (5) de freinage d'urgence qui est normalement passif et peut être automatiquement activé si l'interface ombilicale tombe en panne.

10. Dispositif selon la revendication 9, dans lequel le module (5) de freinage comprend un système de clavette (38, 39), dont les surfaces inclinées mutuellement en contact actionnent des semelles (40) de frein radialement respectives, une série de ressorts (41) qui sollicitent les semelles (40) radialement vers l'extérieur et un actionneur qui contrecarre normalement la contrainte élastique des semelles (40) afin de retenir lesdites semelles dans une position radialement contractée, ledit actionneur étant activé par l'interface ombilicale (71) de façon à libérer les semelles (40) si l'interface ombilicale est endommagée.
